# EUROPÄISCHE PATENTSCHRIFT

(11) **EP 3 766 711 B1**
(45) Veröffentlichungstag und Bekanntmachung des Hinweises auf die Patenterteilung: **21.08.2024**
(21) Anmeldenummer: 20170053.1
(22) Anmeldetag: 17.04.2020
(51) Int. Cl.: B60G 17/02, B60G 17/027, B60G 15/06, F16F 9/56

(54) **PNEUMATISCH BETÄTIGBARE EINSTELLVORRICHTUNG ZUR BEAUFSCHLAGUNG EINER FEDEREINRICHTUNG EINER EINEN ROHRKÖRPER AUFWEISENDEN FEDERDÄMPFEREINRICHTUNG**
PNEUMATICALLY ACTUATED ADJUSTING DEVICE FOR LOADING A SPRING DEVICE OF A SPRING SHOCK ABSORBER DEVICE HAVING A TUBULAR BODY
DISPOSITIF DE RÉGLAGE À ACTIONNEMENT PNEUMATIQUE DESTINÉ À L'APPLICATION D'UN DISPOSITIF RESSORT À UN DISPOSITIF AMORTISSEUR DE RESSORT COMPORTANT UN CORPS TUBULAIRE

(30) Priorität: 17.07.2019 DE 102019119419
(43) Veröffentlichungstag der Anmeldung: 20.01.2021
(73) Patentinhaber: KTM AG, 5230 Mattighofen (AT)
(72) Erfinder: FRIEDL, Eduard, 5231 Schalchen (AT)
(74) Vertreter: Söllner, Udo

(56) Entgegenhaltungen:
- EP-A1- 2 862 734
- EP-A2- 1 128 085
- DE-A1- 102013 102 591
- DE-A1- 4 438 756
- JP-A- 2005 121 060
- JP-A- H03 117 738
- JP-A- H07 132 722
- JP-U- S5 853 942
- JP-U- S58 165 353
- JP-U- S63 106 931
- JP-U- S63 106 932
- US-A- 4 667 941
- US-A1- 2019 030 974

## Beschreibung

Die vorliegende Erfindung betrifft eine pneumatisch betätigbare Einstellvorrichtung zur Beaufschlagung einer Federeinrichtung einer einen Rohrkörper aufweisenden Federdämpfereinrichtung nach dem Oberbegriff des Anspruchs 1.

Die erfindungsgemäße Einstellvorrichtung kann dazu benutzt werden, die Federungseigenschaften einer Federeinrichtung einer Federdämpfereinrichtung in der Form beispielsweise eines Motorrads zu verändern. Die Federdämpfereinrichtung besitzt üblicherweise einen Rohrkörper, welcher im Inneren eine Dämpfungseinrichtung aufweist, mittels der Bewegungen des Aufbaus des Motorrads gedämpft werden können. Der Rohrkörper ist dabei üblicherweise von einer Federeinrichtung in der Form einer Schraubendruckfeder umgeben, welche gleichzeitig als Hauptfeder der Federdämpfereinrichtung wirkt.

Über eine Veränderung der Vorspannung der Federeinrichtung kann das Federverhalten der Hauptfeder beeinflusst werden, wobei zu diesem Zweck die Hauptfeder stärker oder weniger stark vorgespannt wird. Die Veränderung der Vorspannung wird dabei über eine an einem Außengewinde des Rohrkörpers axial relativ zum Rohrkörper verlagerbare Einstellmutter durchgeführt, welche von der Hauptfeder mit Druck beaufschlagt wird.

Soll die Hauptfeder stärker vorgespannt werden, wird die Einstellmutter zur Vorspannung der Hauptfeder relativ zum Rohrkörper verlagert, sodass dann, wenn die Hauptfeder während der Verlagerungsbewegung der Einstellmutter eine Druckkraft auf die Einstellmutter ausübt, hohe Betätigungskräfte zur Drehbetätigung der Einstellmutter am Außengewinde des Rohrkörpers notwendig sind.

Diese hohen Druckkräfte führen selbstverständlich auch zu einer hohen Belastung des Außengewindes des Rohrkörpers und des damit in Eingriff stehenden Innengewindes der Einstellmutter, sodass die Gewinde einer hohen Belastung und einem hohen Verschleiß unterliegen. Darüber hinaus besteht auch die Gefahr, dass Verschmutzungen im Bereich des Gewindes der Einstellmutter die Gefahr von Beschädigungen erhöhen bis zur Funktionsunfähigkeit.

Zur Abmilderung oder Beseitigung dieses Problems ist es schon bekannt geworden, zur Erleichterung der Drehbetätigung der Einstellmutter die Druckkraftbeaufschlagung der Einstellmutter für das Zeitintervall der Drehbetätigung aufzuheben, indem die Hauptfeder mittels einer Einstellvorrichtung in der Form eines Preload Adjusters vorgespannt wird, sodass dann die Einstellmutter am Gewinde des Rohrkörpers einfach verdreht werden kann, da die Einstellmutter dann nicht mehr von der Druckkraft der Hauptfeder beaufschlagt wird.

Anhand der DE 10 2016 213 429 A1 ist eine Feder- und Dämpfungsanordnung für ein Motorrad bekannt geworden, welche einen Preload Adjuster in der Form eines hydraulischen Stellgliedes besitzt, wobei das Stellglied mit mehr oder weniger Hydraulikflüssigkeit befüllt werden kann, um die wirksame Federlänge der Hauptfeder der bekannten Anordnung beeinflussen zu können.

Auch ist anhand der EP 1 781 475 B1 ein Stoßdämpfer mit druckgestützter Verstellung bekannt geworden, welche einen elektrohydraulischen Preload Adjuster aufweist, der ein Gehäuse aufweist, in welchem ein hydraulisch betätigter Kolben angeordnet ist, der von der Hauptfeder beaufschlagt wird und über die hydraulische Betätigung des Kolbens eine Axialverlagerung des Kolbens herbeigeführt werden kann, um das Federverhalten der Hauptfeder beeinflussen zu können.

Anhand der JP S63 106932 U ist eine Einstellvorrichtung nach dem Oberbegriff des Anspruchs 1 bekannt geworden.

Schließlich ist auch bereits ein pneumatisch betätigter Federvorspanner oder Preload Adjuster der Öhlins Racing AB bekannt geworden, welcher ein Gehäuse aufweist, in dem sich ein Kolben axial verlagerbar angeordnet befindet, der durch Druckbeaufschlagung mittels Druckluft betätigt werden kann und der Federvorspanner eine Federauflage besitzt, an welcher die Hauptfeder anliegt. Eine Axialverlagerung des ringförmig ausgebildeten Kolbens, der sowohl am Innenumfang als auch am Außenumfang jeweils Dichtungseinrichtungen in der Form von O-Ringen besitzt, führt zu einer Druckbeaufschlagung der Hauptfeder, sodass sich diese während der Druckbeaufschlagung des Kolbens aus dem Druckkraft auf eine Einstellmutter des bekannten Federvorspanners ausübenden Eingriff löst und die Einstellmutter leicht am Rohrkörper verdreht und somit axial verlagert werden kann.

Dieser bekannte Federvorspanner weist eine Vielzahl von Bauteilen auf, welche einerseits dessen Herstellkosten erhöhen und andererseits dessen Fehleranfälligkeit erhöhen.

Ausgehend hiervon liegt der vorliegenden Erfindung zur Beseitigung der geschilderten Nachteile die Aufgabe zugrunde, eine pneumatisch betätigbare Einstellvorrichtung zur Beaufschlagung einer Federeinrichtung einer einen Rohrkörper aufweisenden Federdämpfereinrichtung bereitzustellen, welche einfach hergestellt werden kann und fehlersicher bedient werden kann. Darüber hinaus soll auch eine Federdämpfereinrichtung bereitgestellt werden, welche sich durch die genannte Einstellvorrichtung auszeichnet.

Die Erfindung weist zur Lösung dieser Aufgabe hinsichtlich der Einstellvorrichtung die im Anspruch 1 angegebenen Merkmale auf. Vorteilhafte Ausgestaltungen der Einstellvorrichtung sind in den weiteren Ansprüchen beschrieben.

Darüber hinaus weist die Erfindung hinsichtlich der Federdämpfereinrichtung die im Anspruch 12 angegebenen Merkmale auf.

Die Erfindung schafft eine pneumatisch betätigbare Einstellvorrichtung zur Beaufschlagung einer Federeinrichtung einer einen Rohrkörper mit einem Außengewinde aufweisenden Federdämpfereinrichtung, wobei die Einstellvorrichtung ein rohrstückförmiges Gehäuse aufweist, welches zur Umfassung des Rohrkörpers ausgebildet ist und einen eine Umfangswand des Gehäuses durchsetzenden Durchlass aufweist und die Einstellvorrichtung eine Einstellmutter mit einem Innengewinde besitzt, wobei das Gehäuse eine Innenausnehmung zur Ausbildung einer Druckkammer aufweist und zur lösbaren Anlage an der Einstellmutter ausgebildet ist und sich die Innenausnehmung mit dem Durchlass in Fluidverbindung befindet und die Innenausnehmung eine Druckwand ausbildet, deren Fluidbeaufschlagung eine das Gehäuse in Axiallängsrichtung beaufschlagende Kraft hervorruft und das Gehäuse eine zur Federkraftbeaufschlagung durch die Federeinrichtung ausgebildete Widerlagerfläche aufweist, wobei das Gehäuse an einer Innenausnehmung einen konusförmigen Absatz aufweist und die Einstellmutter einen zur Anlage an dem Absatz eingerichteten konusförmigen Absatz besitzt und die das Gehäuse in Axiallängsrichtung beaufschlagende Kraft den Absatz aus der Anlage am Absatz löst.

Die erfindungsgemäße Einstellvorrichtung zeichnet sich unter anderem dadurch aus, dass sie im Gegensatz zu den bekannten Einstellvorrichtungen oder Preload Adjustern keinen separaten Kolben aufweist, welcher eigenständig gefertigt werden muss und bei der Einstellvorrichtung dann als separates Bauteil vorliegen würde und, wie dies vorstehend bereits erläutert wurde, sowohl am Innenumfang als auch am Außenumfang jeweils Dichtungseinrichtungen besitzen müsste, um einerseits gegen das den Kolben aufweisende Gehäuse abzudichten und andererseits auch gegen den Rohrkörper der Federdämpfereinrichtung abzudichten.

Alleine durch den Wegfall des separaten Kolbens besitzt die erfindungsgemäße Einstellvorrichtung einen wesentlichen Vorteil gegenüber den bekannten Einstellvorrichtungen oder Preload Adjustern. Bei dem rohrstückförmigen Körper kann es sich um den Rohrkörper oder einen anderen rohrstückförmigen Körper der Einstellvorrichtung handeln, wie dies nachfolgend noch näher erläutert werden wird.

Die erfindungsgemäße Einstellvorrichtung besitzt ein Gehäuse mit einer Druckwand, welche mittels Fluidbeaufschlagung durch beispielsweise Druckluft eine Kraft ausbildet, welche zur Druckkraftbeaufschlagung der zu komprimierenden Federeinrichtung vorgesehen ist, sodass die dann von einer Druckkraftbeaufschlagung durch die Federeinrichtung freie Einstellmutter am Rohrkörper ohne großen Kraftaufwand durch Herbeiführung einer Schraubbewegung zwischen dem Innengewinde der Einstellmutter und dem Außengewinde des Rohrkörpers verlagert werden kann, beispielsweise in Richtung zur mittels der Druckwand komprimierten Federeinrichtung verlagert werden kann, sodass eine nachfolgende Entspannung der Druckkammer der erfindungsgemäßen Einstellvorrichtung dazu führt, dass die Federeinrichtung dann an der Widerlagerfläche der erfindungsgemäßen Einstellvorrichtung wieder anliegt, aber beispielsweise in einem stärker vorgespannten Zustand als vor der Verlagerung der Einstellmutter.

Wenn die Federeinrichtung also mittels einer Druckkraftbeaufschlagung der Druckwand verlagert werden soll, führt dies auch dazu, dass sich das die Druckwand aufweisende Gehäuse der Einstellvorrichtung aus der lösbaren Anlagestellung an der Einstellmutter löst und somit die Einstellmutter auch nicht mehr von der Federkraft oder Reaktionskraft der Federeinrichtung beaufschlagt wird und somit auch keine von der Federkraft herbeigeführte Flächenpressung zwischen den Gewindegängen des Innengewindes der Einstellmutter und des Außengewindes des Rohrkörpers mehr vorliegt und die Einstellmutter daher mit geringem Kraftaufwand relativ zum Rohrkörper verschraubt also axial verlagert werden kann.

Wenn die Druckkraftbeaufschlagung der Druckwand aufgehoben wird, um die Betriebsstellung der Federdämpfereinrichtung wieder herbeizuführen, kommt es aufgrund der Federkraft der Federeinrichtung zu einer Axialverlagerung des die Druckwand aufnehmenden Gehäuses relativ zum Rohrkörper und zur Herbeiführung der Anlagestellung des Gehäuses an der Einstellmutter. Damit wird über die Widerlagerfläche des Gehäuses, an der die Federeinrichtung anliegt, die Federkraft über eine zwischen der Einstellmutter und dem Gehäuse ausgebildete Anlagefläche an der Einstellmutter abgestützt und somit auch am Rohrkörper der Federdämpfereinrichtung.

Während der Verstellbewegung der Einstellmutter relativ zum Rohrkörper ist die Einstellmutter aber frei von der Federkraft und kann vom Benutzer des die Federdämpfereinrichtung aufweisenden Fahrzeugs ohne Kraftaufwand und ohne Werkzeugaufwand leicht betätigt werden.

Es ist nach einer Weiterbildung der Erfindung auch vorgesehen, dass das Gehäuse zur Axialverlagerung an dem rohrstückförmigen Körper entgegen der Federkraft der Federeinrichtung ausgebildet ist. Diese Konfiguration besitzt den Vorteil, dass sich die Federeinrichtung an dem Gehäuse abstützt, welches bei der Druckkraftbeaufschlagung der Druckkammer auch zur Verlagerung der Federeinrichtung führt, indem die Druckwand beispielsweise mit Druckluft über den das Gehäuse durchsetzenden Durchlass beaufschlagt wird, ohne dass die Notwendigkeit besteht, einen relativ zum Gehäuse axial verlagerbaren, separaten Kolben vorsehen zu müssen, dessen Druckkraftbeaufschlagung und Verlagerung letztlich zur Beaufschlagung der Federeinrichtung führt, wie dies bei dem bekannten Federvorspanner der Fall ist.

Es ist nach einer Weiterbildung der Erfindung auch vorgesehen, dass die Einstellvorrichtung eine Federscheibe aufweist, welche an der Widerlagerfläche des Gehäuses in Anlage bringbar ist und eine Fläche aufweist, die zur Druckkraftbeaufschlagung durch die Federeinrichtung ausgebildet ist.

Diese Konfiguration weist den Vorteil auf, dass das Gehäuse beispielsweise mittels eines Aluminium aufweisenden Legierungswerkstoffs kostengünstig gefertigt werden kann, da der zu hohen Flächenpressungen führende letzte oder obere Gewindegang der Federeinrichtung nicht an der Widerlagerfläche des Gehäuses direkt anliegt, sondern an der als Zwischenring ausgebildeten Federscheibe und die Federscheibe einfach ausgetauscht werden kann, wenn dies beispielsweise Verschleiß bedingt erforderlich ist und bei einem solchen Verschleißbild keine Notwendigkeit besteht, das Gehäuse der Einstellvorrichtung auszutauschen.

Es ist nach der Erfindung auch vorgesehen, dass das Gehäuse an einer Innenausnehmung einen konusförmigen Absatz aufweist, welcher mit der Einstellmutter in Anlage bringbar ist und der Absatz mindestens einen Bereich der Einstellmutter mit einer radial nach innen wirkenden Klemmkraft zu deren lösbarer Festlegung an dem rohrstückförmigen Körper beaufschlagt.

Wenn sich das Gehäuse bei einer Beaufschlagung der Druckwand mittels beispielsweise Druckluft von der Einstellmutter löst, dann kommt auch der konusförmige Absatz des Gehäuses von der Einstellmutter außer Eingriff und die Einstellmutter ist am rohrförmigen Körper, welcher beispielsweise der Rohrkörper der Federdämpfereinrichtung sein kann, ohne großen Kraftaufwand drehbar.

Wird dann die Beaufschlagung der Druckkammer mittels der Druckluft gelöst, verschiebt die Federeinrichtung das Gehäuse in Richtung zur Einstellmutter und der konusförmige Absatz des Gehäuses kommt mit der Einstellmutter in Anlage. Über den konusförmigen Absatz des Gehäuses und einer komplementär ausgebildeten Anlagefläche in der Form eines konusförmigen Absatzes an der Einstellmutter kommt es zu einer Druckkraftbeaufschlagung der Anlagefläche an der Einstellmutter in Richtung nach radial innen und auf diese Weise zur Ausbildung einer Klemmkraft zwischen der Einstellmutter und dem rohrstückförmigen Körper, wodurch eine Lagesicherung und ein prozesssicheres Klemmen der Einstellmutter relativ zum rohrstückförmigen Körper erreicht wird.

Dadurch kann sich die Einstellmutter auch bei stoßartigen Belastungen der Federdämpfereinrichtung beispielsweise bei einer Fahrt des mit der Einstellvorrichtung versehenen Fahrzeugs im unwegsamen Gelände nicht in unkontrollierter Weise vom rohrstückförmigen Körper lösen. Solche stoßartigen Belastungen können beispielsweise verstärkt auftreten, wenn die mit der erfindungsgemäßen Einstellvorrichtung versehene Federdämpfereinrichtung an einem Offroad Motorrad zum Einsatz kommt.

Es ist nach einer Weiterbildung der Erfindung auch vorgesehen, dass die Einstellvorrichtung Mittel zur zumindest abschnittsweisen Ausbildung der die Druckwand aufweisenden Druckkammer aufweist und die Mittel zur Anlage an dem Rohrkörper der oder einer zwischen dem Rohrkörper und einer zur Umfassung des Rohrkörpers ausgebildeten Adapterhülse ausgebildet sind.

Bei dem Mittel oder den Mitteln kann es sich um Einrichtungen oder Bauteile handeln, welche dafür vorgesehen sind, dass die Druckkammer ausgebildet werden kann. So kann es sich bei dem Mittel beispielsweise um eine Dichtungseinrichtung handeln, welche an dem Rohrkörper anliegt, sodass dieses Mittel einen Teil der Druckkammer bereitstellt. Auch kann es sich bei dem Mittel beispielsweise um eine Dichtungseinrichtung handeln, welche an einer Hülse angeordnet ist, welche den Rohrkörper der Federdämpfereinrichtung umgibt. Damit bildet die Dichtungseinrichtung einen Teilbereich der Druckkammer aus.

Es ist nach einer Weiterbildung der Erfindung auch vorgesehen, dass das Gehäuse mindestens eine Entspannungseinrichtung aufweist, welche durch Verlagerung des Gehäuses relativ zum Rohrkörper mit der Druckkammer in Fluidverbindung bringbar ist. Bei der Verlagerung kann es sich beispielsweise um eine Axialverlagerung oder eine durch Drehbetätigung des Gehäuses relativ zum Rohrkörper herbeigeführte Verlagerung handeln.

Die Verlagerung führt dazu, dass eine beispielsweise als Entlüftungsschlitz ausgebildete Entspannungseinrichtung des Gehäuses mit der Druckkammer in Fluidverbindung gebracht werden kann, sodass über die Entspannungseinrichtung Innendruck aus der Druckkammer entweichen kann oder abgebaut werden kann.

Ein Druckaufbau in der Druckkammer führt zu einer Beaufschlagung der Druckwand der Druckkammer und diese Beaufschlagung zu einer Axialverlagerung der Federeinrichtung. Durch das Vorsehen der Entspannungseinrichtung wird erreicht, dass nach der vorbestimmten Verlagerung des Gehäuses relativ zum Rohrkörper oder zum rohrstückförmigen Körper eine weitere Verlagerung des Gehäuses nicht mehr stattfindet, da eine solche weitere Verlagerung des Gehäuses durch eine weitere Druckbeaufschlagung der Druckkammer beispielsweise durch den Benutzer der erfindungsgemäßen Einstellvorrichtung dazu führt, dass die Entspannungseinrichtung in Fluidverbindung mit der Druckkammer kommt und daher ein weiteres Ansteigen des Innendrucks in der Druckkammer verhindert wird.

Dadurch wird der Vorteil erzielt, dass der vom Benutzer erzielbare Verfahrweg entsprechend den technischen Vorgaben eingeschränkt ist und eine Beschädigung von Bauteilen durch Überdruck oder unsachgemäßen Verfahrweg verhindert werden kann.

Es ist nach einer Weiterbildung der Erfindung auch vorgesehen, dass die Einstellvorrichtung einen mit einer Innenausnehmung versehenen Ringkörper aufweist, welcher zur Umfassung des Rohrkörpers der Federdämpfereinrichtung ausgebildet ist und am Innenumfang sowie am Außenumfang weitgehend U-förmig ausgebildete Nuten zur Aufnahme von Dichtungseinrichtungen aufweist und der Ringkörper eine Drucckammer zwischen einer Innenumfangswand des Gehäuses und der Druckwand sowie der Außenumfangswand des Rohrkörpers begrenzt.

Diese Konfiguration sorgt dafür, dass über den beispielsweise als Verschlussring ausgebildeten Ringkörper Dichtungseinrichtungen der erfindungsgemäßen Einstellvorrichtung gehaltert werden können, welche einerseits an der Außenumfangswand des rohrstückförmigen Körpers oder Rohrkörpers anliegen und andererseits auch an der Innenumfangswand des Gehäuses anliegen, sodass die Druckkammer über die Dichtungseinrichtungen sowohl relativ zum rohrstückförmigen Körper oder Rohrkörper als auch relativ zum Gehäuse abgedichtet ist. Die Druckwand und die Außenumfangswand des Rohrkörpers begrenzen auf diese Weise zusammen mit dem Ringkörper und den Dichtungseinrichtungen die Druckkammer der erfindungsgemäßen Einstellvorrichtung.

Es ist nach einer Weiterbildung der Erfindung auch vorgesehen, dass das Gehäuse im Bereich der Druckwand eine weitgehend U-förmig ausgebildete Nut zur Aufnahme einer Dichtungseinrichtung aufweist, welche sich an einem Bereich des rohrstückförmigen Körpers ohne Außengewinde abstützt und das Gehäuse an einem in Axiallängsrichtung zur Nut beabstandeten Bereich eine weitere Dichtungseinrichtung aufweist, welche sich an einem Außenumfangsbereich des rohrstückförmigen Körpers abstützt und die Druckkammer zwischen dem Gehäuse und den Dichtungseinrichtungen sowie dem rohrstückförmigen Körper ausgebildet ist.

Diese Konfiguration sorgt dafür, dass im Vergleich zum vorbekannten Preload Adjuster nicht nur der Kolben zur Beaufschlagung der Federeinrichtung in Wegfall geraten ist, sondern auch ein Ringkörper, welcher mit Dichtungseinrichtungen die Drucckammer abdichtet, nicht mehr benötigt wird, sondern eine weitere Funktionsintegration dahingehend erzielt wird, dass Dichtungseinrichtungen zur Abdichtung der Drucckammer von anderen Bauteilen der Einstellvorrichtung aufgenommen werden und ein separates Trägerelement zur Aufnahme der Dichtungen nicht mehr benötigt wird.

Es ist nach einer Weiterbildung der Erfindung auch vorgesehen, dass der rohrstückförmige Körper zumindest entlang eines Teilbereichs seiner Längserstreckung ein Innengewinde aufweist, welches mit dem Außengewinde des Rohrkörpers in lösbaren Eingriff bringbar ist und die Einstellvorrichtung eine Klemmmutter aufweist, welche mit dem rohrstückförmigen Körper zu dessen lösbarer axialfester und drehfester Anordnung am Rohrkörper der Federdämpfereinrichtung in lösbaren Eingriff anordbar ist.

Diese Konfiguration weist den Vorteil auf, dass der rohrstückförmige Körper zur Anordnung der Klemmmutter vorgesehen ist und die Klemmmutter daher nicht direkt mit dem Rohrkörper in Schraubeingriff steht. Der rohrstückförmige Körper kann daher als Zwischenhülse oder Adapterhülse dienen, welche am Innenumfang ein Innengewinde aufweist, welches mit dem Außengewinde des Rohrkörpers in Eingriff steht. Diese Konfiguration besitzt den Vorteil, dass die Einstellvorrichtung an verschiedenen und unterschiedlich ausgebildeten Federdämpfereinrichtungen zum Einsatz kommen kann und über den rohrstückförmigen Körper eine Anordnung auch an bereits bestehenden Federdämpfereinrichtungen möglich ist, da nur dafür Sorge getragen werden muss, dass der rohrstückförmige Körper mit seinem Innengewinde kompatibel ist zum Außengewinde der Federdämpfereinrichtung, sodass die erfindungsgemäße Einstellvorrichtung auch als After Market Bauteil oder Zubehör Bauteil eingesetzt werden kann. Mittels des rohrstückförmigen Körpers kann daher die erfindungsgemäße Einstellvorrichtung an verschiedenen Positionen unterschiedlichen Gewindetypen vorhandener Federdämpfereinrichtungen angeordnet werden, sodass die Einstellvorrichtung zur Weiterbildung von unterschiedlichen Federbeintypen geeignet ist.

Es ist nach einer Weiterbildung der Erfindung auch vorgesehen, dass eine Dichtungseinrichtung im Bereich zwischen dem Gehäuse und der Einstellmutter vorgesehen ist und eine Dichtungseinrichtung im Bereich zwischen der Einstellmutter und dem Rohrkörper vorgesehen ist. Mittels dieser Dichtungseinrichtungen wird der weitere Vorteil der erfindungsgemäßen Einstellvorrichtung erreicht, dass das Eindringen von Verschmutzungen in den Gewindebereich zwischen Innengewinde der Einstellmutter und Außengewinde des Rohrkörpers vermieden wird.

Diese Konfiguration trägt also dazu bei, dass in den Gewindebereich keine Verschmutzungen in der Form von Staub oder dergleichen eintreten können und somit die Einstellmutter immer frei am Rohrkörper verschraubt werden kann, was insbesondere dann von Vorteil ist, wenn die erfindungsgemäße Einstellvorrichtung an einer Federdämpfereinrichtung für ein Offroad Motorrad zum Einsatz kommt.

In ähnlicher Weise ist es nach einer Weiterbildung der Erfindung auch vorgesehen, dass eine Dichtungseinrichtung im Bereich zwischen dem rohrstückförmigen Körper und dem Rohrkörper sowie eine Dichtungseinrichtung im Bereich zwischen der Klemmmutter und dem Gehäuse angeordnet ist. Auch bei dieser Konfiguration der erfindungsgemäßen Einstellvorrichtung ist also das Eindringen von Schmutz oder Verunreinigungen in den Gewindebereich vermieden wird, welcher einerseits zur Verschraubung der Klemmmutter und andererseits zur Verschraubung der Einstellmutter erforderlich ist.

Schließlich ist nach einer Weiterbildung der Erfindung auch eine Federdämpfereinrichtung vorgesehen, welche eine Federeinrichtung und einen Rohrkörper und eine innerhalb des Rohrkörpers angeordnete Dämpfungseinrichtung mit Mitteln zur Beeinflussung der Strömung eines Dämpfungsfluids zwischen zwei im Rohrkörper ausgebildeten Fluidkammern besitzt, wobei die Federdämpfungseinrichtung eine pneumatisch betätigbare Einstellvorrichtung aufweist, wie sie vorstehend erläutert wurde.

Die Erfindung wird im Folgenden anhand der Zeichnung näher erläutert. Diese zeigt in:
Fig. 1 eine Schnittdarstellung der pneumatisch betätigbaren Einstellvorrichtung gemäß einer ersten Ausführungsform der vorliegenden Erfindung;
Fig. 2 eine Schnittdarstellung einer weiteren Ausführungsform der Einstellvorrichtung gemäß der vorliegenden Erfindung in einer Stellung der Einstellvorrichtung im Fahrbetrieb;
Fig. 3 eine Darstellung ähnlich derjenigen nach Fig. 2, die die Einstellvorrichtung der Ausführungsform nach Fig. 2 in einer Stellung zeigt, die sich einstellt, wenn die Druckkammer zur Verstellbeaufschlagung der Federeinrichtung mit unter Druck gesetzte Luft beaufschlagt wird;
Fig. 4 eine vergrößerte Darstellung des Ausschnitts "A" nach Fig. 3;
Fig. 5 eine perspektivische Explosionsansicht Ansicht eines Rohrkörpers eines Federbeins eines Motorrads mit einer daran angeordneten Einstellvorrichtung gemäß der ersten Ausführungsform;
Fig. 6 eine Schnittansicht eines Federbeins eines Motorrads mit einer daran angeordneten Einstellvorrichtung gemäß der zweiten Ausführungsform; und
Fig. 7 bis Fig. 12 Darstellungen des Federbeins mit der Einstellvorrichtung gemäß der zweiten Ausführungsform zur Erläuterung der einfachen Demontage der Hauptfeder des Federbeins unter Zuhilfenahme der erfindungsgemäßen Einstellvorrichtung.

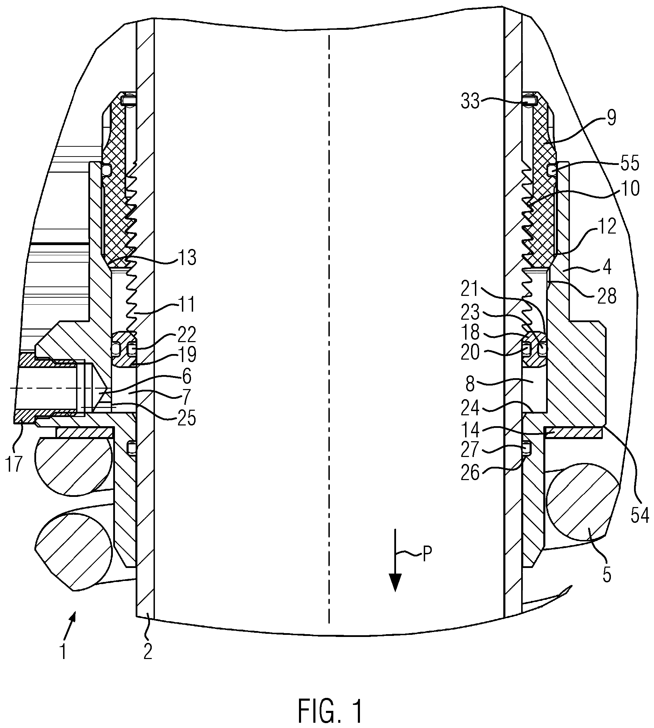

Fig. 1 der Zeichnung zeigt eine Schnittansicht einer ersten Ausführungsform der pneumatisch betätigbaren Einstellvorrichtung 1 gemäß der vorliegenden Erfindung.

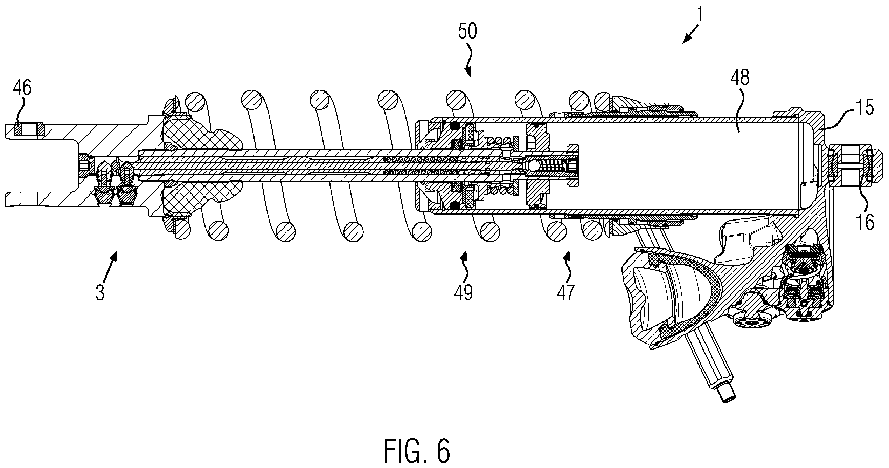

Diese Ausführungsform der Einstellvorrichtung 1 kann an einem Rohrkörper 2 einer Federdämpfereinrichtung 3 angeordnet werden, welche näher anhand von Fig. 6 der Zeichnung ersichtlich ist.

Wie es anhand von Fig. 1 der Zeichnung darüber hinaus ersichtlich ist, weist die Einstellvorrichtung 1 ein rohrstückförmiges Gehäuse 4 auf, welches den Rohrkörper 2 umgibt und an dem die Federeinrichtung 5 anliegt, welche als Hauptfeder der Federdämpfereinrichtung 3 dient.

Das Gehäuse 4 der Einstellvorrichtung 1 weist einen Durchlass 6 auf, über den ein unter Druck gesetztes Fluid in der Form beispielsweise von Luft in eine Innenausnehmung 7 des Gehäuses 4 eingebracht werden kann, wobei die Innenausnehmung 7 gleichzeitig der Ausbildung einer Druckkammer 8 dient.

Darüber hinaus besitzt die Einstellvorrichtung 1 eine Einstellmutter 9 mit einem Innengewinde 10, welches sich in Schraubeingriff befindet mit einem Außengewinde 11, welches bei der in Fig. 1 der Zeichnung dargestellten Ausführungsform an dem Rohrkörper 2 der Federdämpfereinrichtung 3 ausgebildet ist.

Wie es nachfolgend noch erläutert werden wird, kann das Außengewinde ganz allgemein an einem rohrstückförmigen Körper vorgesehen sein, also auch an einem hülsenförmigen Körper, welcher zur Aufnahme des Rohrkörpers der Federdämpfereinrichtung vorgesehen ist und als Zwischenhülse oder Adapterhülse dient, sodass die erfindungsgemäße Einstellvorrichtung auch als nachrüstbares After Market Bauteil ausgebildet sein kann beziehungsweise verwendet werden kann.

Wie es darüber hinaus anhand von Fig. 1 der Zeichnung ersichtlich ist, liegt das Gehäuse 4 über einen konusförmigen Absatz 12 an einem komplementär ausgebildeten konusförmigen Absatz 13 der Einstellmutter 9 an.

Auf diese Weise findet bei der in Fig. 1 der Zeichnung dargestellten Betriebsstellung, die sich beim normalen Fahrbetrieb eines Fahrzeugs in der Form beispielsweise eines Motorrads mit einer Federdämpfereinrichtung, die mit der erfindungsgemäßen Einstellvorrichtung versehen ist, einstellt, eine Druckkraftübertragung von der Federeinrichtung 5 über die als Zwischenring vorgesehene Federscheibe 14 in das Gehäuse 4 statt, das sich über den konusförmigen Absatz 12 am konusförmigen Absatz 13 der Einstellmutter abstützt. Der Zwischenring 14 dient dabei der Kraftübertragung auf die am Gehäuse 4 ausgebildete Widerlagerfläche 54, über die die Federkraft in das Gehäuse 4 eingetragen wird.

Da sich die Einstellmutter 9 über das Innengewinde 10 am Außengewinde 11 des Rohrkörpers 2 abstützt, wird die von der Federeinrichtung 5 erzeugte Federkraft letztlich in den Rohrkörper 2 eingeleitet, welcher sich über das näher anhand von Fig. 6 ersichtliche Federbeingehäuse 15 und das daran angeordnete Federbeinauge 16 am Rahmen des nicht näher dargestellten Motorrads abstützt.

Wenn es der Fahrer des Motorrads wünscht, die über die Axialverstellung der Einstellmutter 9 am Rohrkörper 2 veränderbare Federvorspannung der Federeinrichtung 5 zu verändern, dann kann der Fahrer eine nicht näher dargestellte externe Pumpe in der Form beispielsweise einer üblichen Luftpumpe für ein Fahrrad oder einer zum Bordwerkzeug des Fahrzeugs gehörenden Pumpe an den in Fig. 1 der Zeichnung dargestellten Ventilkörper 17 anschließen und über eine Betätigung der Pumpe über den Durchlass 6 Druckluft in die Innenausnehmung 7 einbringen, sodass sich in der Druckkammer 8 ein über die Betätigung der Pumpe veränderbares Druckniveau beziehungsweise ein Innendruck einstellt.

Wie es anhand von Fig. 1 ersichtlich ist, wird die Druckkammer 8 in der Zeichnungsebene in Richtung nach oben von einem als Ringkörper 18 ausgebildeten Verschlussring 19 abgeschlossen, welcher sowohl am Innenumfang als auch am Außenumfang jeweils eine U-förmige umlaufende Nut 20, 21 aufweist, die zur Aufnahme von jeweiligen Dichtungseinrichtungen 22, 23 in der Form von O-Ringen ausgebildet sind.

Die in der Nut 20 angeordnete Dichtungseinrichtung 22 stützt sich am Außenumfang des Rohrkörpers 2 ab und die in der Nut 21 angeordnete Dichtungseinrichtung 23 stützt sich am Innenumfang der Innenausnehmung 7 des Gehäuses 4 ab, und der Ringkörper 18 stützt sich am Außengewinde 11 des Rohrkörpers beziehungsweise einem dort ausgebildeten Absatz ab, sodass die Druckkammer 8 gegenüber dem Außengewinde 11 abgedichtet ist und in Richtung nach radial innen vom Außenumfang des Rohrkörpers 2 abgeschlossen ist.

Wie es anhand von Fig. 1 darüber hinaus ersichtlich ist, besitzt die Innenausnehmung 7 eine Druckwand 24, welche sich vom zylindersegmentförmigen Wandbereich 25 der Innenausnehmung 7 radial in Richtung nach innen erstreckt und zwar bis in den Bereich des Außenumfangs des Rohrkörpers 2.

Das Gehäuse 4 weist unterhalb der Druckwand 24 eine Innenumfangsnut 26 auf, in der eine Dichtungseinrichtung in der Form eines O-Rings 27 angeordnet ist, sodass die Druckkammer 8 zwischen dem Verschlussring 19, dem Wandbereich 25 und der Druckwand 24 sowie dem Rohrkörper ausgebildet ist.

Eine Erhöhung des Innendrucks in der Druckkammer 8 führt daher zu einer resultierenden Druckkraftbeaufschlagung der Druckwand 24 und dies wiederum führt dazu, dass sich die Druckkraft an der Federeinrichtung 5 abstützt, welche entsprechend der über die Erhöhung des Innendrucks in der Druckkammer 8 aufgebrachten Drucckraft axial in der Zeichnungsebene in Richtung des Pfeils P verlagert wird, also stärker komprimiert wird.

Diese Komprimierung der Federeinrichtung 5 führt dazu, dass sich das Gehäuse 4 mit seinem konusförmigen Absatz 12 vom konusförmigen Absatz 13 der Einstellmutter 9 löst und die Einstellmutter 9 daher nicht mehr von der Federkraft der Federeinrichtung 5 beaufschlagt wird. In diesem Zustand kann die Einstellmutter 9 mit ihrem Innengewinde 10 frei von Druckkraftbeaufschlagung durch die Federeinrichtung 5 an dem Außengewinde 11 verschraubt werden, also beispielsweise in Richtung des Pfeils P weiter nach unten gerichtet verschraubt werden oder entgegen der Richtung des Pfeils P weiter in Richtung nach oben gerichtet verschraubt werden.

Über eine weitere Erhöhung des Innendrucks in der Druckkammer 8 wird die Federeinrichtung 5 weiter komprimiert und das Gehäuse 4 durch die Druckkraftbeaufschlagung der Druckwand 24 weiter in Richtung des Pfeils P nach unten verlagert.

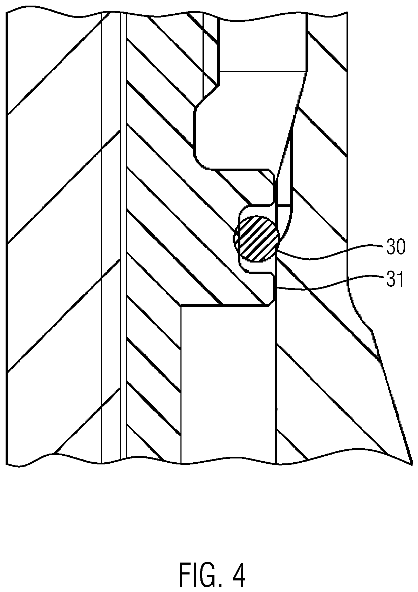

Wie es anhand von Fig. 1 und Fig. 4 der Zeichnung ersichtlich ist, ist das Gehäuse 4 im Bereich des Innenumfangs mit einer als Entlüftungsschlitz 28 ausgebildeten Entspannungseinrichtung 29 versehen.

Wenn die Druckkammer 8 weiter mit Druckluft beaufschlagt wird, führt dies zu einer weiteren Axialverlagerung des Gehäuses 4 in Richtung des Pfeils P nach Fig. 1, bis sich die in Fig. 4 der Zeichnung dargestellte Hubbegrenzungsstellung einstellt, zu der der untere Randbereich 30 des Entlüftungsschlitzes 28 in den Bereich der Dichtungseinrichtung 23 gelangt und bei einer weiteren Erhöhung des Innendrucks in der Druckkammer 8 die Dichtungseinrichtung passiert, bis der Innendruck in der Drucckammer 8 über ein Entweichen von Druckluft über den Ringspalt 31 und den Entlüftungsschlitz 28 soweit reduziert wurde, dass über das sich nun einstellende neue Kräftegleichgewicht zwischen der mittels der Druckwand 24 aufgebauten Druckkraft und der Federkraft der Federeinrichtung 5 das Gehäuse 4 entgegen der Richtung des Pfeils P wieder so weit nach oben verlagert wurde, dass der untere Randbereich des Entlüftungsschlitzes 28 wieder gegen die Dichtungseinrichtung 23 abdichtet und ein weiteres Entweichen von Druckluft aus der Druckkammer 8 unterbleibt.

Auf diese Weise wird eine Hubbegrenzungseinrichtung realisiert und dafür gesorgt, dass nur ein vorbestimmter Verlagerungsweg des Gehäuses 4 relativ zum Rohrkörper 2 möglich ist und eine Fehlbedienung der erfindungsgemäßen Einstellvorrichtung ausgeschlossen ist.

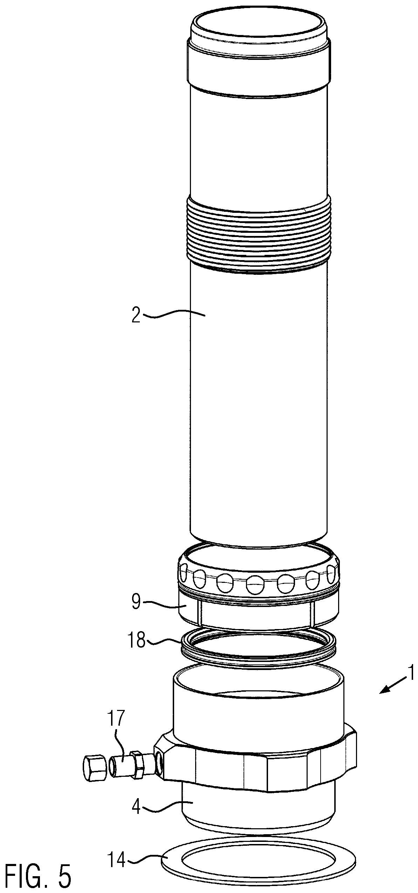

Fig. 5 der Zeichnung zeigt die Ausführungsform der erfindungsgemäßen Einstellvorrichtung 1 in einer Explosionsdarstellung.

Wie es ohne weiteres ersichtlich ist, kann die Einstellvorrichtung 1 an der einen Rohrkörper 2 oder rohrstückförmigen Körper aufweisenden und näher anhand der Fig. 6 der Zeichnung ersichtlichen Federdämpfereinrichtung 3 angeordnet werden, sodass über den Ventilkörper 17, an dem eine Ventilkappe 32 lösbar angeordnet ist, unter Druck gesetzte Luft in die Druckkammer 8 eingebracht werden kann, um die Federeinrichtung 5 zu komprimieren und auf diese Weise dafür zu sorgen, dass die Einstellmutter 9 an dem Rohrkörper 2 ohne großen Kraftaufwand verschraubt werden kann. Eine am Innenumfang der Einstellmutter 9 vorgesehene Dichtungseinrichtung 33, die sich am Außenumfang des Rohrkörpers 2 abstützt, sorgt dafür, dass keine Verschmutzung in Bereich der Gewinde 10, 11 gelangen kann und auf diese Weise auch vermieden wird, dass Verschmutzungen in den Bereich des Schraubeneingriffs der beiden Gewinde gelangen.

Wenn der Benutzer der erfindungsgemäßen Einstellvorrichtung die von ihm gewünschte Neueinstellung der Federvorspannung herbeigeführt hat, indem die Einstellmutter am Rohrkörper entsprechend in Richtung nach oben oder nach unten verschraubt worden ist, kann die Druckkammer entspannt werden, indem beispielsweise ein Entspannungsventil an der nicht näher dargestellten Pumpe betätigt wird, um die unter Druck gesetzte Luft aus der Druckkammer zu entspannen, sodass die von der Federeinrichtung aufgebrachte Federkraft dafür sorgt, dass das Gehäuse wieder in Richtung zur Einstellmutter verlagert wird, bis der rohrstückförmige Absatz am Gehäuse am rohrstückförmigen Absatz der Einstellmutter zur Anlage kommt und auf diese Weise die Betriebsstellung der Einstellvorrichtung für den normalen Fahrbetrieb des mit der Einstellvorrichtung versehenen Fahrzeugs herbeigeführt worden ist.

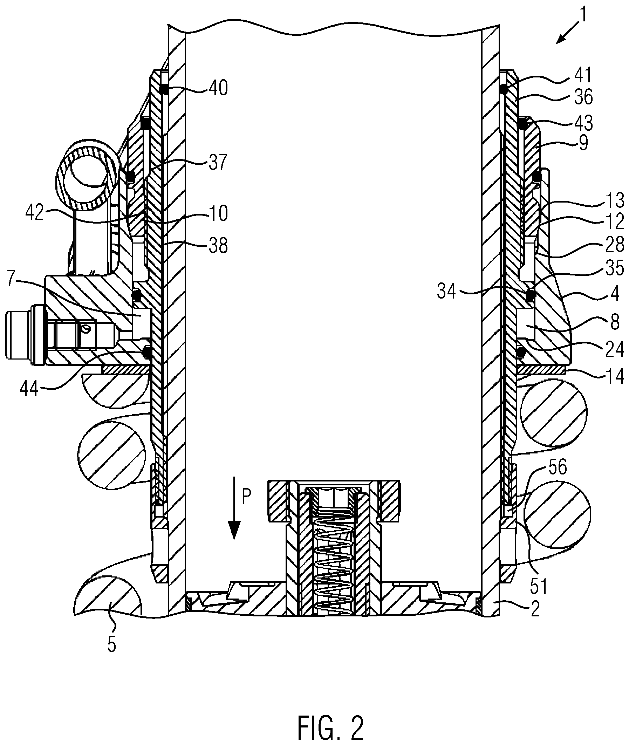

Nachfolgend wird näher anhand von Fig. 2 der Zeichnung auf eine modifizierte Ausführungsform der erfindungsgemäßen Einstellvorrichtung eingegangen werden, welche die Einstellvorrichtung 1 in einer Fahrbetriebsstellung zeigt, bei der sich die Federkraft der Federeinrichtung 5 an dem Rohrkörper 2 abstützt.

Der Rohrkörper 2 der Federdämpfereinrichtung 3 wird von der Federeinrichtung 5 umgeben, die an der Federscheibe oder Zwischenscheibe 14 anliegt, welche die Federkraft in das Gehäuse 4 der erfindungsgemäßen Einstellvorrichtung 1 einleitet.

In der Fahrbetriebsstellung stützt sich das Gehäuse 4 über den konusförmigen Absatz 12 am konusförmigen Absatz 13 der Einstellmutter 9 ab und auch die zweite Ausführungsform der Einstellvorrichtung weist einen Entlüftungsschlitz 28 auf, dessen Funktion der vorstehend unter Bezugnahme auf die Ausführungsform nach Fig. 1 erläuterten Funktion des Entlüftungsschlitzes 28 entspricht.

Die Druckkammer 8 wird bei dieser Ausführungsform ebenfalls im Bereich der Innenausnehmung 7 gebildet, anstelle des die Druckkammer 8 in Richtung nach oben abschließenden Ringkörpers 18 ist bei dieser Ausführungsform der Einstellvorrichtung 1 die Druckkammer 8 in Richtung nach oben durch eine Dichtungseinrichtung 34 abgedichtet, welche in einer U-förmigen Nut 35 eines rohrstückförmigen Körpers 36 angeordnet ist, der zur Ausbildung der erfindungsgemäßen Einstellvorrichtung als nachrüstbares After Market Bauteil vorgesehen ist.

Wie es anhand von Fig. 2 der Zeichnung ohne weiteres ersichtlich ist, besitzt der als Adapterhülse 37 oder Zwischenhülse ausgebildete rohrstückförmige Körper 36 an seiner Innenumfangsfläche 38 ein Innengewinde 39, welches zum Schraubeingriff mit einem an der Außenumfangsfläche des Rohrkörpers 2 vorgesehenen Außengewindes 11 vorgesehen ist.

Auf diese Weise kann über die mit dem zum Schraubeingriff mit dem Außengewinde 11 des Rohrkörpers 2 mit einem entsprechenden Innengewinde 39 versehene Adapterhülse 37 die erfindungsgemäße Einstellvorrichtung 1 an jeder bereits vorhandenen Federdämpfereinrichtung 3 nachgerüstet werden, da es hierzu nur erforderlich ist, an der Adapterhülse 37 ein zum Außengewinde 11 des Rohrkörpers 2 passendes Innengewinde vorzusehen.

Die Adapterhülse 37 weist an der Innenumfangsfläche 38 eine Dichtungseinrichtung 40 auf, die anhand von Fig. 2 der Zeichnung ersichtlich ist und welche das Eindringen von Verschmutzungen in den Schraubeingriff zwischen dem Außengewinde 11 des Rohrkörpers 2 und dem Innengewinde 39 der Adapterhülse 37 verhindert.

Die Adapterhülse 37 weist an der Außenumfangsfläche 41 ein Außengewinde 42 auf, welches zum Schraubeingriff mit dem an der Einstellmutter 9 vorgesehenen Innengewinde 10 ausgebildet ist. Über die an der Innenumfangsfläche der Einstellmutter 9 vorgesehene Dichtungseinrichtung 43 wird das Eindringen von Verschmutzungen in den Bereich des Schraubeingriffs zwischen dem Innengewinde 10 der Einstellmutter 9 und dem Außengewinde 42 der Adapterhülse 37 verhindert.

Über den Durchlass 7 des Gehäuses 4 kann unter Druck gesetzte Luft in die Drucckammer 8 der zweiten Ausführungsform der erfindungsgemäßen Einstellvorrichtung eingebracht werden, welche über eine Dichtungseinrichtung 44 im Bereich der Innenumfangsfläche 45 am Austreten aus der Druckkammer 8 gehindert wird, sodass die Druckbeaufschlagung der Druckkammer 8 dafür sorgt, dass über die auf die Druckwand 24 wirkende Druckkraft die Federeinrichtung 5 in der Zeichnungsebene der Fig. 2 in Richtung des Pfeils P in Richtung nach unten verschoben wird und somit sich der konusförmige Absatz 12 des Gehäuses 4 vom konusförmigen Absatz 13 der Einstellmutter 9 löst und die Einstellmutter 9 an der Adapterhülse 37 ohne Kraftaufwand verschraubt werden kann, sodass sie je nach Richtung der Schraubbewegung eine in Richtung des Pfeils P betrachtet höhere oder tiefere Stellung einnimmt.

Wenn der Innendruck in der Druckkammer 8 abgesenkt wird, indem die vorstehend bereits erläuterte Entspannungseinrichtung an der nicht näher dargestellten Pumpe betätigt wird, führt dies zu einem Absinken der das Gehäuse 4 in Richtung nach unten verlagernden Druckkraft und die Federeinrichtung 5 verschiebt das Gehäuse 4 relativ zur Einstellmutter 9 wieder entgegen der Richtung des Pfeils P in Richtung nach oben, bis der konusförmige Absatz 12 des Gehäuses 4 wieder mit dem konusförmigen Absatz 13 der Einstellmutter 9 in Anlage kommt und sich die Federkraft der Federeinrichtung 5 über den zwischen der Einstellmutter 9 und der Adapterhülse 37 ausgebildeten Gewindeeingriff und dem zwischen der Adapterhülse 37 und dem Rohrkörper 2 ausgebildeten Gewindeeingriff letztlich am Rohrkörper 2 abstützt.

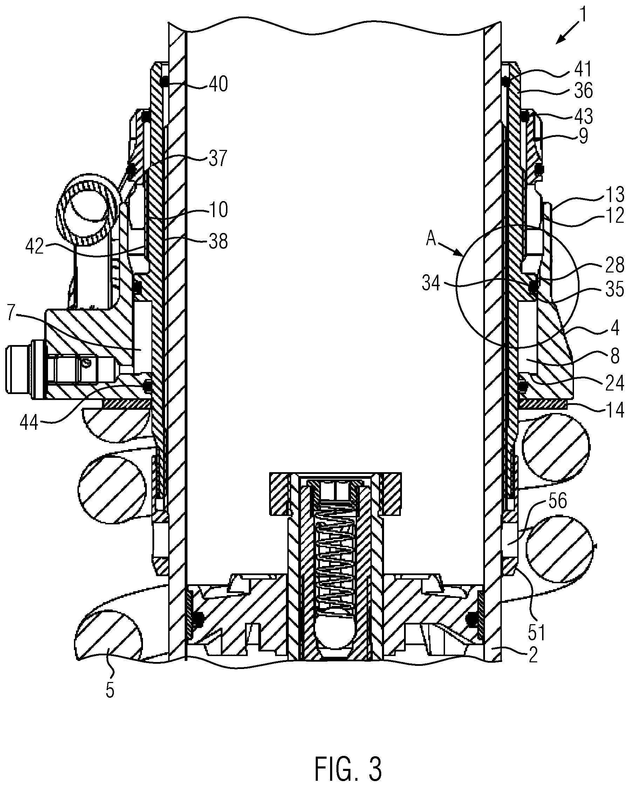

Eine Fehlbedienung der erfindungsgemäßen Einstellvorrichtung 1 wird auch bei der zweiten Ausführungsform dadurch verhindert, dass die Entspannungseinrichtung in der Form des Entlüftungsschlitzes 28 bei einer entsprechenden Axialverlagerung des Gehäuses 4 in Richtung nach unten, wie dies anhand von Fig. 3 der Zeichnung gezeigt ist, welche die Stellung der Einstellvorrichtung 1 im Verstellmodus zeigt, in den Bereich der Dichtungseinrichtung 34 gelangt und eine weitere Erhöhung des Innendrucks in der Druckkammer 8 letztlich dazu führt, dass unter Druck gesetzte Luft aus der Druckkammer 8 entweichen kann, bis die Federeinrichtung 5 das Gehäuse 4 wieder so weit entgegen der Richtung des Pfeils P nach oben verlagert hat, sodass die Dichtungseinrichtung 34 die Druckkammer 8 wieder abdichtet und ein weiteres Entweichen von Luft aus der Druckkammer 8 vermieden wird.

Am in Richtung des Pfeils P nach Fig. 2 unteren Endbereich der Adapterhülse 37 ist eine Klemmmutter 51 vorgesehen, mit der die Adapterhülse 37 relativ zum Rohrkörper 2 mittels eines Klemmeingriffs lösbar festgelegt werden kann.

Fig. 6 zeigt eine Schnittdarstellung der Federdämpfereinrichtung 3 mit einer daran angeordneten Einstellvorrichtung 1 nach der zweiten Ausführungsform.

Wie es ohne weiteres ersichtlich ist, kann die Federdämpfereinrichtung 3 über die Aufnahme 46 beispielsweise an einer Hinterradschwinge eines nicht näher dargestellten Motorrads angebracht werden und über das obere Federbeinauge 16 am Rahmen des Motorrads.

Die Federdämpfereinrichtung 3 weist im Innenraum 47 des Rohrkörpers 2 eine erste Fluidkammer 48 und eine zweite Fluidkammer 49 auf, welche jeweils zur Aufnahme eines nicht näher dargestellten Dämpfungsfluids ausgebildet sind und zwischen denen über eine mit Ventileinrichtungen versehene Dämpfungseinrichtung 50 das Dämpfungsfluid verschoben werden kann.

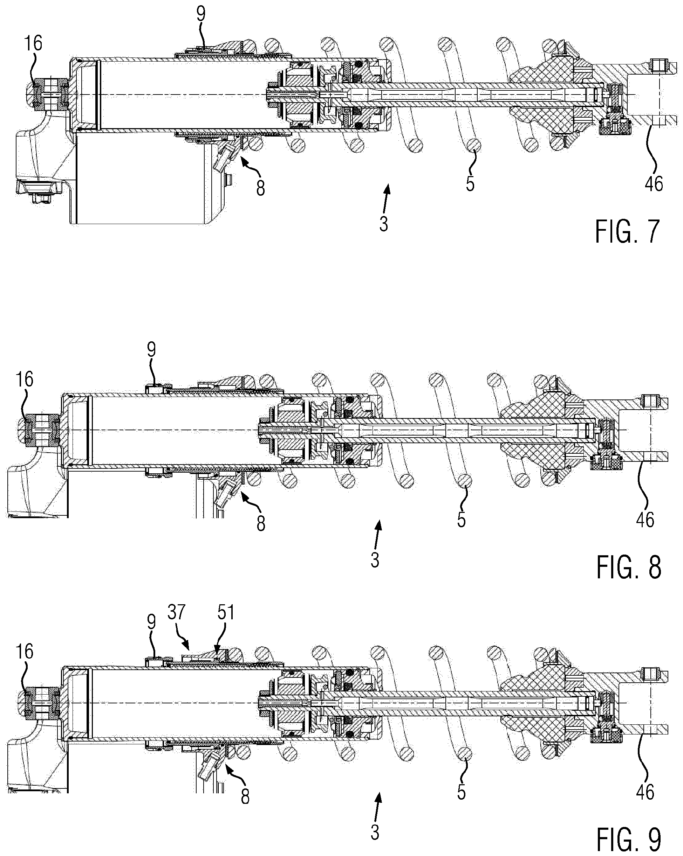

Nachfolgend wird unter Bezugnahme auf die Figuren 7 bis 12 die Vorgehensweise beschrieben, mit der unter Zuhilfenahme der erfindungsgemäßen Einstellvorrichtung 1 einfach die Hauptfeder 5 von der Federdämpfereinrichtung 3 gelöst werden kann. Die Vorgehensweise wird dabei anhand der zweiten Ausführungsform der erfindungsgemäßen Einstellvorrichtung erläutert.

Fig. 7 der Zeichnung zeigt, dass über die Druckbeaufschlagung der Druckkammer 8 die Federeinrichtung 5 bereits in Richtung zur unteren Aufnahme 46 komprimiert wurde und daher die Einstellmutter 9 bereits frei drehbar ist, ohne von der Federeinrichtung 5 beaufschlagt zu werden.

Fig. 8 der Zeichnung zeigt, dass die Einstellmutter 9 vom Schraubeingriff mit dem Außengewinde 42 der Adapterhülse 37 bereits gelöst wurde und in Richtung zum oberen Federbeinauge 16 verlagert wurde.

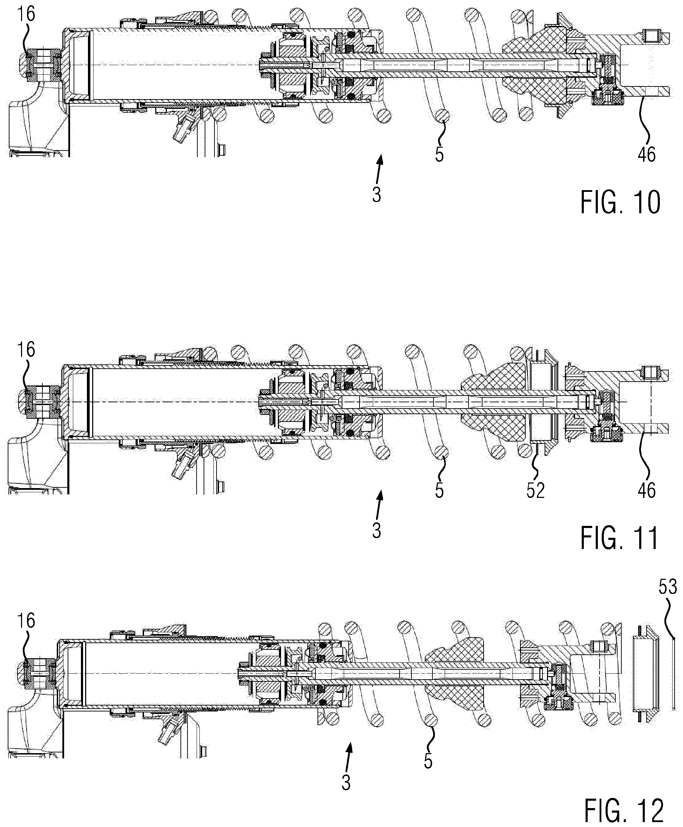

Fig. 9 der Zeichnung zeigt, dass die unter Druck gesetzte Luft aus der Druckkammer 8 abgelassen wurde und sich die Federeinrichtung 5 daher bereits wieder entspannt hat. Nun kann die Klemmmutter 51, welche die Adapterhülse 37 lösbar fixiert, gelöst werden und die Adapterhülse 37 in Richtung zum oberen Federbeinauge 16 verschoben werden, was dazu führt, dass die Federeinrichtung 5 im unkomprimierten Zustand frei liegt, wie dies anhand von Fig. 10 der Zeichnung ersichtlich ist.

In einem nächsten Schritt ist es möglich, wie dies anhand von Fig. 11 der Zeichnung ersichtlich ist, den unteren Federteller 52 geringfügig in Richtung zum oberen Federbeinauge 16 zu verlagern, sodass der den Federteller 52 haltende Sprengring 53 gelöst werden kann und die Hauptfeder oder Federeinrichtung 5 von der Federdämpfereinrichtung 3 in Richtung nach unten, also in Richtung zur Aufnahme 46 verlagert und von der Federdämpfereinrichtung 3 abgenommen werden kann, wie dies anhand von Fig. 12 der Zeichnung ersichtlich ist.

Die erfindungsgemäße Einstellvorrichtung weist den Vorteil auf, dass durch die pneumatische Unterstützung der Verlagerung der vorgespannten Federeinrichtung die Einstellmutter von der Beaufschlagung durch die Federvorspannung entlastet werden kann und somit leicht, bedienerfreundlich und ohne jeden Einsatz von Werkzeug verstellt werden kann.

Dadurch, dass die erfindungsgemäße Einstellvorrichtung über den Entlüftungsschlitz so ausgebildet ist, dass ein maximaler Verstellweg nicht überschritten werden kann, wird eine Fehlbedienungen durch den Benutzer ausschließende Einstellvorrichtung geschaffen.

Durch das Vorsehen der beschriebenen Dichtungseinrichtungen sind alle beweglichen Teile und Gewinde der Einstellvorrichtung vor Verschmutzungen geschützt und die Aufrechterhaltung der Funktionalität im normalen Fahrbetrieb erreicht und insbesondere auch erreicht, dass die Gewinde immer leichtgängig bleiben.

Dadurch, dass zwischen dem Gehäuse und der Einstellmutter eine durch die Ausbildung der konusförmigen Absätze sichere Kraftübertragung zwischen diesen Bauteilen erzielt wird, ist eine durch den Benutzer aktive Herbeiführung der Kraftübertragung nicht erforderlich und eine Vorrichtung zur Verfügung gestellt, welche vom Benutzer fehlerfrei bedient werden kann. Der Einsatz bei bekannten Systemen üblicherweise vorhandenen Klemmschraube zur Fixierung der Einstellmutter ist vollständig in Wegfall geraten, da eine solche Klemmschraube oftmals dazu führt, dass durch zu starkes Festziehen der Klemmschraube der Rohrkörper der Federdämpfereinrichtung verformt wird und dies zu einer Veränderung des Dämpfungsverhaltens der mit den bekannten Einstellvorrichtungen versehenen Federdämpfereinrichtungen führt.

Aufgrund der einfachen Bauweise der erfindungsgemäßen Einstellvorrichtung ist eine gewichtssparende und platzsparende Ausführungsform geschaffen, welche im Gegensatz zu bekannten Einstellvorrichtungen nicht das vorsehen eines Kolbens erfordert, wie dies vorstehend erläutert wurde.

Die erfindungsgemäße Einstellvorrichtung ist darüber hinaus auch zur Verwendung an Federdämpfereinrichtungen geeignet, welche an Offroad Motorrädern zum Einsatz kommen, dadurch die Kapselung der beweglichen Bauteile durch die geschilderten Dichtungseinrichtungen das Eindringen von Verschmutzungen verhindert wird.

Zudem ist es unter Verwendung der erfindungsgemäßen Einstellvorrichtung möglich, die Hauptfeder der mit der erfindungsgemäßen Einstellvorrichtung versehenen Federdämpfereinrichtungen ohne den Einsatz von Werkzeug auszutauschen, um beispielsweise eine Hauptfeder mit einer gewünschten anderen Federkennlinie an der Federdämpfereinrichtung anbringen zu können.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

1. Einstellvorrichtung
2. Rohrkörper
3. Federdämpfereinrichtung
4. Gehäuse
5. Federeinrichtung, Hauptfeder
6. Durchlass
7. Innenausnehmung
8. Druckkammer
9. Einstellmutter
10. Innengewinde
11. Außengewinde
12. Absatz
13. Absatz
14. Federscheibe
15. Federbeingehäuse
16. Federbeinauge
17. Ventilkörper
18. Ringkörper
19. Verschlussring
20. Nut
21. Nut
22. Dichtungseinrichtung
23. Dichtungseinrichtung
24. Druckwand
25. Wandbereich
26. Innenumfangsnut
27. Dichtungseinrichtung
28. Entlüftungsschlitz
29. Entspannungseinrichtung
30. Randbereich
31. Ringspalt
32. Ventilkappe
33. Dichtungseinrichtung
34. Dichtungseinrichtung
35. Nut
36. Körper
37. Adapterhülse
38. Innenumfangsfläche
39. Innengewinde
40. Dichtungseinrichtung
41. Außenumfangsfläche
42. Außengewinde
43. Dichtungseinrichtung
44. Dichtungseinrichtung
45. Innenumfangsfläche
46. Aufnahme
47. Innenraum
48. Fluidkammer
49. Fluidkammer
50. Dämpfungseinrichtung
51. Klemmmutter
52. Federteller
53. Sprengring
54. Widerlagerfläche
55. Dichtungseinrichtung
56. Dichtungseinrichtung

## Patentansprüche

1. Pneumatisch betätigbare Einstellvorrichtung (1) zur Beaufschlagung einer Federeinrichtung (5) einer einen Rohrkörper (2) mit einem Außengewinde (11) aufweisenden Federdämpfereinrichtung (3), wobei die Einstellvorrichtung (1) ein rohrstückförmiges Gehäuse (4) aufweist, welches zur Umfassung des Rohrkörpers (2) ausgebildet ist und einen eine Umfangswand des Gehäuses (4) durchsetzenden Durchlass (6) aufweist und die Einstellvorrichtung (1) eine Einstellmutter (9) mit einem Innengewinde (10) besitzt, wobei das Gehäuse (4) eine Innenausnehmung (7) zur Ausbildung einer Druckkammer (8) aufweist und zur lösbaren Anlage an der Einstellmutter (9) ausgebildet ist und sich die Innenausnehmung (7) mit dem Durchlass (6) in Fluidverbindung befindet und die Innenausnehmung (7) eine Druckwand (24) ausbildet, deren Fluidbeaufschlagung eine das Gehäuse (4) in Axiallängsrichtung beaufschlagende Kraft hervorruft und das Gehäuse (4) eine zur Federkraftbeaufschlagung durch die Federeinrichtung (3) ausgebildete Widerlagerfläche (54) aufweist, **dadurch gekennzeichnet, dass** das Gehäuse (4) an der Innenausnehmung einen konusförmigen Absatz (12) aufweist und die Einstellmutter (9) einen zur Anlage an dem Absatz (12) eingerichteten konusförmigen Absatz (13) besitzt und die das Gehäuse (4) in Axiallängsrichtung beaufschlagende Kraft den Absatz (12) aus der Anlage am Absatz (13) löst.

2. Pneumatisch betätigbare Einstellvorrichtung (1) nach Anspruch 1, **dadurch gekennzeichnet, dass** das Gehäuse (4) zur Axialverlagerung an dem Rohrkörper (2) entgegen der Federkraft der Federeinrichtung (5) ausgebildet ist.

3. Pneumatisch betätigbare Einstellvorrichtung (1) nach Anspruch 1 oder 2, **dadurch gekennzeichnet, dass** die Einstellvorrichtung (1) eine Federscheibe (14) aufweist, welche an der Widerlagerfläche (54) in Anlage bringbar ist und eine Fläche aufweist, die zur Druckkraftbeaufschlagung durch die Federeinrichtung (5) ausgebildet ist.

4. Pneumatisch betätigbare Einstellvorrichtung (1) nach einem der vorstehenden Ansprüche, **dadurch gekennzeichnet, dass** die Einstellvorrichtung (1) Mittel (19, 22, 23, 24, 27, 34) zur zumindest abschnittsweisen Ausbildung der die Druckwand (24) aufweisenden Druckkammer (8) aufweist und die Mittel zur Anlage an dem Rohrkörper (2) oder einem zwischen dem Rohrkörper (2) und zur Umfassung des Rohrkörpers (2) als Adapterhülse (37) ausgebildeten rohrstückförmigen Körpers (37) ausgebildet sind.

5. Pneumatisch betätigbare Einstellvorrichtung (1) nach einem der vorstehenden Ansprüche 1 bis 3 oder Anspruch 4, **dadurch gekennzeichnet, dass** der konusförmige Absatz (12) mindestens den mit dem konusförmigen Absatz (13) versehenen Bereich der Einstellmutter (9) mit einer radial nach innen wirkenden Klemmkraft zu deren lösbarer Festlegung an dem Rohrkörper (2) oder des rohrstückförmigen Körpers (37) beaufschlagt.

6. Pneumatisch betätigbare Einstellvorrichtung (1) nach einem der Ansprüche 1 bis 3 oder Anspruch 4 oder 5, **dadurch gekennzeichnet, dass** das Gehäuse (4) mindestens eine Entspannungseinrichtung (28, 29) aufweist, welche durch Verlagerung des Gehäuses (4) relativ zum Rohrkörper (2) oder des rohrstückförmigen Körpers (37) mit der Druckkammer (8) in Fluidverbindung bringbar ist.

7. Pneumatisch betätigbare Einstellvorrichtung (1) nach einem der vorstehenden Ansprüche, **dadurch gekennzeichnet, dass** die Einstellvorrichtung (1) einen mit einer Innenausnehmung versehenen Ringkörper (18, 19) aufweist, welcher zur Umfassung des Rohrkörpers (2) der Federdämpfereinrichtung (3) ausgebildet ist und am Innenumfang sowie am Außenumfang weitgehend U-förmig ausgebildete Nuten (20, 21) zur Aufnahme von Dichtungseinrichtungen (22, 23) aufweist, und der Ringkörper (18, 19) eine Druckkammer (8) zwischen einer Innenumfangswand des Gehäuses (4) und der Druckwand (24) begrenzt.

8. Pneumatisch betätigbare Einstellvorrichtung nach einem der Ansprüche 4 bis 7, **dadurch gekennzeichnet, dass** das Gehäuse (4) im Bereich der Druckwand (24) eine weitgehend U-förmig ausgebildete Nut zur Aufnahme einer Dichtungseinrichtung (44) aufweist, welche sich an einem Bereich des rohrstückförmigen Körpers (37) ohne Außengewinde abstützt und das Gehäuse (4) an einem in Axiallängsrichtung zur Nut beabstandeten Bereich eine weitere Dichtungseinrichtung (34) aufweist, welche sich an einem Außenumfangsbereich des rohrstückförmigen Körpers (37) abstützt und die Druckkammer (8) zwischen dem Gehäuse (4) und den Dichtungseinrichtungen (34, 44) sowie dem rohrstückförmigen Körper (37) ausgebildet ist.

9. Pneumatisch betätigbare Einstellvorrichtung (1) nach einem der Ansprüche 4 bis 8, **dadurch gekennzeichnet, dass** der rohrstückförmige Körper (37) zumindest entlang eines Teilbereichs seiner Längserstreckung ein Innengewinde (39) aufweist, welches mit dem Außengewinde (11) des Rohrkörpers (2) in lösbaren Eingriff bringbar ist und die Einstellvorrichtung (1) eine Klemmmutter (51) aufweist, welche mit dem rohrstückförmigen Körper (37) zu dessen lösbarer axialfester und drehfester Anordnung am Rohrkörper (2) der Federdämpfereinrichtung (3) in lösbarem Eingriff anordbar ist.

10. Pneumatisch betätigbare Einstellvorrichtung (1) nach einem der vorstehenden Ansprüche, **gekennzeichnet durch** eine Dichtungseinrichtung (55) im Bereich zwischen dem Gehäuse (4) und der Einstellmutter (9) sowie eine Dichtungseinrichtung (33) im Bereich zwischen der Einstellmutter (9) und dem Rohrkörper (2).

11. Pneumatisch betätigbare Einstellvorrichtung nach einem der Ansprüche 4 bis 10, **gekennzeichnet durch** eine Dichtungseinrichtung (40) im Bereich zwischen dem rohrstückförmigen Körper (37) und dem Rohrkörper (2) sowie eine Dichtungseinrichtung (56) im Bereich zwischen der Klemmmutter (51) und dem Gehäuse (4).

12. Federdämpfereinrichtung (3) mit einer Federeinrichtung (5) und einem Rohrkörper (2) und einer innerhalb des Rohrkörpers (2) angeordneten Dämpfungseinrichtung (50) mit Mitteln zur Beeinflussung der Strömung eines Dämpfungsfluids zwischen zwei im Rohrkörper (2) ausgebildeten Fluidkammern (48, 49) , **gekennzeichnet durch** eine pneumatisch betätigbare Einstellvorrichtung (1) nach einem der vorstehenden Ansprüche.

## Claims

1. Pneumatically actuatable adjuster (1) for acting on a spring device (5) of a spring damper device (3) having a tube body (2) with an external thread (11), wherein the adjuster (1) has a tubular housing (4) designed to surround the tube body (2) and having a passage (6) passing through a circumferential wall of the housing (4), and the adjuster (1) has an adjusting nut (9) with an internal thread (10), wherein the housing (4) has an inner recess (7) for forming a pressure chamber (8) and is designed to releasably abut against the adjusting nut (9), and the inner recess (7) is in fluid connection with the passage (6) and the inner recess (7) forms a pressure wall (24), the action of fluid on which pressure wall bringing about a force acting on the housing (4) in an axial longitudinal direction, and the housing (4) has an abutment surface (54) designed to be acted on with spring force by the spring device (3), **characterised in that** the housing (4) has a conical shoulder (12) on the inner recess and the adjusting nut (9) has a conical shoulder (13) configured to bear against the shoulder (12), and the force acting on the housing (4) in the axial longitudinal direction releases the shoulder (12) from bearing against the shoulder (13).

2. Pneumatically actuatable adjuster (1) according to claim 1, **characterised in that** the housing (4) is designed for axial displacement on the tube body (2) counter to the spring force of the spring device (5).

3. Pneumatically actuatable adjuster (1) according to claim 1 or 2, **characterised in that** the adjuster (1) has a spring washer (14) which can be brought into contact with the abutment surface (54) and has a surface designed to be acted on with compressive force by the spring device (5).

4. Pneumatically actuatable adjuster (1) according to one of the preceding claims, **characterised in that** the adjuster (1) has means (19, 22, 23, 24, 27, 34) for forming at least sections of the pressure chamber (8) having the pressure wall (24), and the means are designed to bear against the tube body (2) or a tubular body (37) designed as an adapter sleeve (37) between the tube body (2) and for surrounding the tube body (2).

5. Pneumatically actuatable adjuster (1) according to one of the preceding claims 1 to 3 or claim 4, **characterised in that** the conical shoulder (12) acts with a radially inwardly acting clamping force on at least the region of the adjusting nut (9) provided with the conical shoulder (13) to releasably secure the adjusting nut to the tube body (2) or the tubular body (37).

6. Pneumatically actuatable adjuster (1) according to one of claims 1 to 3 or claim 4 or 5, **characterised in that** the housing (4) has at least one expansion device (28, 29) which can be brought into fluid connection with the pressure chamber (8) by displacing the housing (4) relative to the tube body (2) or the tubular body (37).

7. Pneumatically actuatable adjuster (1) according to one of the preceding claims, **characterised in that** the adjuster (1) has an annular body (18, 19) provided with an inner recess and designed to surround the tube body (2) of the spring damper device (3), and has substantially U-shaped grooves (20, 21) on the inner circumference and on the outer circumference for receiving sealing devices (22, 23), and the annular body (18, 19) delimits a pressure chamber (8) between an inner circumferential wall of the housing (4) and the pressure wall (24).

8. Pneumatically actuatable adjuster according to one of claims 4 to 7, **characterised in that** the housing (4) has a substantially U-shaped groove in the region of the pressure wall (24) for receiving a sealing device (44) which is supported on a region of the tubular sleeve (37) without an external thread, and the housing (4) has a further sealing device (34) at a region spaced apart from the groove in the axial longitudinal direction, which is supported on an outer circumferential region of the tubular body (37), and the pressure chamber (8) is formed between the housing (4) and the sealing devices (34, 44) and the tubular body (37).

9. Pneumatically actuatable adjuster (1) according to one of claims 4 to 8, **characterised in that** the tubular body (37) has an internal thread (39) along at least a portion of the longitudinal extent thereof, which is releasably engageable with the external thread (11) of the tube body (2), and the adjuster (1) has a clamping nut (51) which can be arranged to be releasably engageable with the tubular body (37) for the releasable axially fixed and rotationally fixed arrangement of the latter on the tube body (2) of the spring damper device (3).

10. Pneumatically actuatable adjuster (1) according to one of the preceding claims, **characterised by** a sealing device (55) in the region between the housing (4) and the adjusting nut (9) and by a sealing device (33) in the region between the adjusting nut (9) and the tube body (2).

11. Pneumatically actuatable adjuster according to one of claims 4 to 10, **characterised by** a sealing device (40) in the region between the tubular body (37) and the tube body (2) and by a sealing device (56) in the region between the clamping nut (51) and the housing (4).

12. Spring damper device (3) comprising a spring device (5), a tube body (2) and a damping device (50) which is arranged inside the tube body (2) and comprises means for influencing the flow of a damping fluid between two fluid chambers (48, 49) formed in the tube body (2), **characterised by** a pneumatically actuatable adjuster (1) according to one of the preceding claims.

## Revendications

1. Dispositif de réglage (1) à actionnement pneumatique destiné à agir sur un dispositif formant ressort (5) d'un dispositif amortisseur à ressort (3) présentant un corps tubulaire (2) pourvu d'un filetage externe (11) ; ledit dispositif de réglage (1) présentant un boîtier (4) en forme de pièce tubulaire, configuré pour enceindre le corps tubulaire (2), ainsi qu'un passage (6) traversant une paroi périphérique du boîtier (4), ledit dispositif de réglage (1) présentant un écrou de réglage (9) pourvu d'un filetage interne (10), ledit boîtier (4) présentant un évidement interne (7) qui permet de former une chambre de pression (8) et étant configuré pour un contact amovible avec l'écrou de réglage (9), ledit évidement interne (7) étant en communication fluidique avec ledit passage (6), et ledit évidement interne (7) formant une paroi de pression (24) sur laquelle l'action d'un fluide provoque une force agissant sur le boîtier (4) dans la direction de l'axe longitudinal, ledit boîtier (4) présentant une surface de butée (54) configurée pour recevoir la force élastique exercée par le dispositif à ressort (3) ; **caractérisé en ce que** le boîtier (4) présente un épaulement conique (12) au niveau de l'évidement interne, **en ce que** l'écrou de réglage (9) possède un épaulement conique (13) conçu pour buter contre ledit épaulement (12) et **en ce que** la force agissant sur le boîtier (4) dans la direction de l'axe longitudinale déloge l'épaulement (12) de sa butée contre l'épaulement (13).

2. Dispositif de réglage (1) à actionnement pneumatique selon la revendication 1, **caractérisé en ce que** le boîtier (4) est configuré pour un déplacement axial sur le corps tubulaire (2) à l'encontre de la force élastique du dispositif formant ressort (5).

3. Dispositif de réglage (1) à actionnement pneumatique selon la revendication 1 ou 2, **caractérisé en ce que** le dispositif de réglage (1) présente une rondelle élastique (14) pouvant venir en butée contre la surface de butée (54) et présentant une surface configurée pour recevoir une force de compression exercée par le dispositif formant ressort (5).

4. Dispositif de réglage (1) à actionnement pneumatique selon l'une des revendications précédentes, **caractérisé en ce que** le dispositif de réglage (1) comporte des moyens (19, 22, 23, 24, 27, 34) permettant de former au moins partiellement la chambre de pression (8) présentant ladite paroi de pression (24) et **en ce que** lesdits moyens sont configurés pour venir en butée contre le corps tubulaire (2) ou contre un corps en forme de pièce tubulaire (37) présentant la configuration d'un manchon adaptateur (37) destiné à enceindre le corps tubulaire (2) et situé entre le corps tubulaire (2).

5. Dispositif de réglage (1) à actionnement pneumatique selon l'une des revendications précédentes 1 à 3 ou la revendication 4, **caractérisé en ce que** l'épaulement conique (12) applique, au moins sur la zone de l'écrou de réglage (9) qui est dotée de l'épaulement conique (13), une force de serrage agissant radialement vers l'intérieur et servant à fixer de manière amovible ledit écrou de réglage sur le corps tubulaire (2) ou le corps en forme de pièce tubulaire (37).

6. Dispositif de réglage (1) à actionnement pneumatique selon l'une des revendications précédentes 1 à 3, ou la revendication 4 ou 5, **caractérisé en ce que** le boîtier (4) présente au moins un dispositif de détente (28, 29) qui, sous l'effet d'un déplacement du boîtier (4) par rapport au corps tubulaire (2) ou du corps en forme de pièce tubulaire (37), peut être mis en communication fluidique avec la chambre de pression (8).

7. Dispositif de réglage (1) à actionnement pneumatique selon l'une des revendications précédentes, **caractérisé en ce que** le dispositif de réglage (1) présente un corps annulaire (18, 19) doté d'un évidement intérieur, destiné à enceindre le corps tubulaire (2) du dispositif amortisseur à ressort (3) et présentant des rainures (20, 21), globalement en forme de U, sur sa circonférence intérieure et sa circonférence extérieure, qui sont destinées à recevoir des dispositifs d'étanchéité (22, 23), et **en ce que** le corps annulaire (18, 19) délimite une chambre de pression (8) entre une paroi circonférentielle intérieure du boîtier (4) et la paroi de pression (24).

8. Dispositif de réglage à actionnement pneumatique selon l'une des revendications 4 à 7, **caractérisé en ce que** le boîtier (4) présente, au niveau de la paroi de pression (24), une rainure globalement en forme de U destinée à recevoir un dispositif d'étanchéité (44) qui repose sur une zone du corps en forme de pièce tubulaire (37) dépourvue de filetage extérieur, et **en ce que** le boîtier (4) présente, sur une zone espacée de la rainure dans la direction de l'axe longitudinal, un autre dispositif d'étanchéité (34) qui repose sur une zone périphérique externe du corps en forme de pièce tubulaire (37) et **en ce que** la chambre de pression (8) est conçue entre le boîtier (4) et les dispositifs d'étanchéité (34, 44) ainsi que le corps en forme de pièce tubulaire (37).

9. Dispositif de réglage (1) à actionnement pneumatique selon l'une des revendications 4 à 8, **caractérisé en ce que** le corps en forme de pièce tubulaire (37) présente, au moins sur une partie de son étendue longitudinale, un filetage interne (39) susceptible de se visser de manière amovible dans le filetage externe (11) du corps tubulaire (2) et **en ce que** le dispositif de réglage (1) comporte un écrou de serrage (51) susceptible de se visser de manière amovible dans le corps en forme de pièce tubulaire (37) pour permettre l'agencement amovible de ce dernier, d'une manière axialement fixe et solidaire en rotation, sur le corps tubulaire (2) du dispositif amortisseur à ressort (3).

10. Dispositif de réglage (1) à actionnement pneumatique selon l'une des revendications précédentes, **caractérisé par** un dispositif d'étanchéité (55) dans la zone située entre le boîtier (4) et l'écrou de réglage (9), et par un dispositif d'étanchéité (33) dans la zone située entre l'écrou de réglage (9) et le corps tubulaire (2).

11. Dispositif de réglage à actionnement pneumatique selon l'une des revendications 4 à 10, **caractérisé par** un dispositif d'étanchéité (40) dans la zone située entre le corps en forme de pièce tubulaire (37) et le corps tubulaire (2), et par un dispositif d'étanchéité (56) dans la zone située entre l'écrou de serrage (51) et le boîtier (4).

12. Dispositif amortisseur à ressort (3) comportant un dispositif formant ressort (5), un corps tubulaire (2) et un dispositif amortisseur (50) agencé à l'intérieur du corps tubulaire (2) et pourvu de moyens visant à influencer l'écoulement d'un fluide amortisseur entre deux chambres de fluide (48, 49) formées dans le corps tubulaire (2) ; **caractérisé par** un dispositif de réglage (1) à actionnement pneumatique selon l'une des revendications précédentes.
